# EUROPEAN PATENT SPECIFICATION

(11) **EP 2 752 399 B1**
(45) Date of publication and mention of the grant of the patent: **02.11.2016**
(21) Application number: 12828758.8
(22) Date of filing: 01.08.2012
(51) Int. Cl.: A23K 10/38

(54) **METHOD FOR PRODUCING BIOFERTILISERS AND BIOSTIMULANTS FOR AGRICULTURE AND ANIMAL FEEDING**
VERFAHREN ZUR HERSTELLUNG VON BIODÜNGERN UND BIOSTIMULATOREN FÜR LANDWIRTSCHAFT UND TIERFÜTTERUNG
PROCÉDÉ D'OBTENTION DE BIOFERTILISANTS ET DE BIOSTIMULANTS POUR L'AGRICULTURE ET L'ALIMENTATION ANIMALE

(30) Priority: 29.08.2011 ES 201131423 P
(43) Date of publication of application: 09.07.2014
(73) Proprietor: Heineken España, S.A., 41007 Sevilla (ES)
(72) Inventor: PARRADO RUBIO, Juan, E-41007 Sevilla (ES)
(74) Representative: Escudero Prieto, Nicolás Enrique
(86) International application number: PCT/ES2012/070599
(87) International publication number: WO 2013/030422

(56) References cited:
- EP-A2- 2 128 114
- WO-A1-03/068002
- ES-A1- 2 329 750
- GB-A- 2 176 487
- GB-A- 2 176 487
- US-A1- 2009 173 122
- DATABASE WPI Derwent Publications Ltd., London, GB; AN 2007-497249, XP003032535 THOMSON & CN 1 919 800 A (CHEN JINGHUA) 28 February 2007

## Description

### FIELD OF THE INVENTION

The invention relates to the field of chemistry applied to agriculture, specifically to organic plant nutrition and to animal feeding. In particular, the invention relates to a method for obtaining organic enzyme extracts from waste from the brewing industry that can be used as bio-stimulants and bio-fertilizers in agriculture, particularly organic farming, and as protein supplements in animal feed.

### BACKGROUND OF THE INVENTION

As is well known in the prior art, a fertilizer is an organic or inorganic, natural or synthetic substance which is used to enrich the soil and to provide plants with one or more essential nutrients for ordinary vegetative growth.

Besides being a comprehensive source of plant nutrients, organic fertilizers contribute organic matter to the soil, which, for sandy soils or low-activity clay soils, for example, represents an improvement in the physical, chemical and biological properties due to a conditioner effect. Such fertilizers may contain micronutrients and beneficial microorganisms such as yeasts, bacteria or fungi.

Accordingly, Kobayashi et al. for instance have studied the effect of a *Saccharomyces cerevisiae* yeast extract combined with an inorganic fertilizer on the growth of pea plants ("Effect of yeast extracts on higher plants" Plant and Soil (1980), 57 (1), 41-7; "Effect of addition of the materials autolyzed from yeast cells on plant growth "Kankyo Kagaku Sogo Kenkyusho Nenpo (1980), 7, 87-90).

Similarly, Kudryasheva et al. ("Amino acids and their utilization, Pishchevaya Promyshlennost (Moscow, Russian Federation) (1992), (4), 13-14) have conducted a study on the use of amino acids from different yeast strains, particularly baker's yeast *Saccharomyces cerevisiae,* in fertilizers, food additives, etc.

Patent HU 9902060 describes an aqueous fertilizer composition for the leaves and roots of plants containing the yeast *Saccharomyces,* plus trace elements, complexing agents, buffering agents and a number of other nutrients such as amino acids, humic acids, enzymes, sugars, etc.

More recently, patent CN 1966663 ("COMPOSITE MICROORGANISM FOLIAGE FERTILIZER BACTERIA AGENT AND ITS PRODUCING METHOD AND USE", 23/05/2007) describes an antimicrobial agent consisting of *Saccharomyces cerevisiae, Lactobacillus plantarum*, *Mucor racemosus and Aspergihus oryzae,* and used as a foliar fertilizer to promote growth of plant roots and leaves by improving the cultivated soils and increasing crop yield.

Furthermore, patent CN 19191800 describes a nutrient for plants and animal which is prepared by diluting *Saccharomyces cerevisiae* yeast sludge in water to obtain an emulsion, mixing this with papain, neutral proteinase and sodium chloride; then hydrolyzing the mixture, inactivating the enzymes, and finally, concentrating or drying the product obtained. The final product contains a large amount of high-absorption-rate nutrients.

Patent CN 1911870 describes a plant nutrient which enhances soil microorganisms, promotes plant growth, increases the rate of utilization of fertilizers and increases plant resistance to disease and stress. This nutrient comprises *Saccharomyces cerevisiae* yeast, *Lactobacillus plantarum* and *Lactobacillus acidophilus bacteria,* and other components such as potato or coffee derivatives, glucose, peptone, magnesium and manganese sulphate, dipotassium hydrogen phosphate and sodium chloride.

Patent US 2003022357 describes a biological fertilizer based on yeast cells of the *Saccharomyces* genus and sludge from wastewater storage or treatment plants, for whose manufacture yeast cells are activated by applying a magnetic field,

Likewise, patent US 2002187900 describes a biological fertilizer comprising electromagnetically activated yeast cells of the *Saccharomyces* genus combined with cattle manure. Similarly, patent US2002187552 discloses a biological fertilizer that also comprises electromagnetically activated *Saccharomyces* cells combined with bird manure.

Other organic fertilizers have been obtained through enzyme technology by using other organic waste such as vegetable waste from parks and gardens, animal waste, agro-industrial waste and household solid waste.

Agro-industrial activities produce a lot of organic agro-industrial by-products -millions of tons a year in Spain alone- resulting from many different activities within the industry such as the production of wine, beer, meat, flour, rice, milk , etc. The generation of large quantities of by-products is one of the main problems created because of their accumulation in the environment, and today there is a great deal of political and social pressure to reduce pollution.

Despite their diverse origins, all these agro-industrial by-products are characterized by their high content of organic matter, being especially rich in protein. This defines them as protein reservoirs with major potential for application in the food industry, in the pharmaceutical and agrochemical industry (organic), which uses them to obtain nutritional products intended for plants, as well as for soil (nitrogen source).

In order to improve the properties of the proteins and thereby make better use thereof, in recent years protein extraction processes have been developed and optimized, such as hydrolysis processes that manage to improve their functional quality.

Accordingly, patent US 5,393,318 A ("A METHOD OF PRODUCING ORGANIC FERTILIZER BY USING FISH AS RAW MATERIAL"; 28.02.1995) relates to a method for producing organic compost by using fish as raw material. The method comprises several steps: cooking the fish and subsequently removing the solids and fat to obtain a stock solution, which is subjected to enzymatic hydrolysis, yielding a clarified liquid which can be used as fertilizer.

Patent US 20020129631 A1 ("METHOD FOR THE PREPARATION OF A PROTEIN HYDROLYZATE USABLE AS A FERTILIZER"; 07.03.2002) provides a method for achieving a protein hydrolyzate which is useful as a fertilizer. obtained from the cooking and pressing of butchery waste using two enzymatic hydrolysis.

WO 2006/082264 ("METHOD OF OBTAINING BIOSTIMULANTS FROM AGRO-INDUSTRIAL RESIDUES"; 10.08.2006) refers to a method of obtaining plant bio-stimulants from agro-industrial waste such as residues from the carob industry or from the bio-alcohol industry from corn seeds for instance. The method includes a first stage of fermentation in which hydrolytic-enzyme-secreting microorganisms are produced, wherein the growth medium is the waste; and a second stage in which the fermentation broths of these residues are used as hydrolytic tools to treat more of the same residues.

Furthermore, patent US 2007/0039362 A1 ("PROGRESSIVE DIGESTION PROCESS FOR PRODUCING FERTILIZER" 22.02.2007) shows a progressive enzymatic digestion process for producing fertilizer from a mixture of products rich in organic matter such as manure, food waste from the food industry or landfills, vegetable processing residues or grass clippings. This progressive digestion consists of two initial mesophilic episodes and a third thermophilic episode, with solids separation.

Moreover, patent US 2008/0302151 A1 ("SOLUBLE LIQUID FERTILIZER FOR ORGANIC AGRICULTURE DERIVED FROM SOY MEAL"; 11.12.2008) outlines a process for manufacturing an organic fertilizer by enzymatic hydrolysis of soya flour, removing the insolubles resulting from such hydrolysis.

WO 2010/114203 ("METHOD FOR MANUFACTURING AMINO ACID LIQUID FERTILIZER USING LIVESTOCK BLOOD AND AMINO ACID LIQUID FERTILIZER MANUFACTURED THEREBY", 07.10.2010) describes a method of producing a liquid amino acid fertilizer by enzymatic hydrolysis of livestock blood.

Furthermore, Celus et al. (CELUS, I. et al. "ENZYMATIC HYDROLYSIS OF BREWER'S SPENT GRAIN PROTEINS AND TECHNOFUNCTIONAL PROPERTIES OF THE RESULTING HYDROLYSATES", J. Agric. Food Chem., Sept., 2007, Vol 55 No 21, pages 8703-8710) describe the enzymatic hydrolysis of proteins from brewery spent grain or bagasse (BSG) which is the insoluble residue from barley malt resulting from must production prior to alcoholic fermentation thereof for the brewing, and which constitutes the main by-product of the brewing industry. The resulting hydrolysates, due to their ideal foaming and emulsifier properties, are used in the food and beverage industries.

Likewise, patent ES 2329750 A1 ("PROCEDURE FOR OBTAINING FERTILIZER PRODUCTS FROM BREWING WASTE" HEINEKEN ESPANA SA, 30.11.2009) describes a multi-step process for making a fertilizer from brewing waste after the alcoholic fermentation of the must. This process is a multi-step process with various phases in which the waste is alkalinized, separated to obtain a liquid phase, which is then subjected to an acid treatment and from which in turn, a solid phase is separated, which is finally subjected to enzymatic hydrolysis or acid hydrolysis. This procedure, however, has the drawback of being complex and expensive and, furthermore, it may produce acidic wastes. The fertilizer product obtained has a low yield and may contain a lot of substances not absorbed by plants which are potentially toxic.

Therefore, the prior art still evidences the need to make use of the waste from the brewing industry obtained after must alcoholic fermentation in a more simple and cost-effective fashion.

Surprisingly, the present inventors have found that the physical treatment of all starting waste, without phase separation at a super-atmospheric pressure and high temperature, once treated with a concentrated base and before undergoing the enzymatic hydrolysis, makes it possible to obtain, in a simpler, less expensive and less polluting manner, enzymatic organic extracts containing nearly all the hydrolyzed protein in the form of free amino acids, oligopeptides and other peptides of higher molecular weight, and also practically all the nutrients of the starting waste. Such extracts, therefore, have a higher bio-fertilizer and bio-stimulant capacity, as well as a greater bio-absorption capacity for animals and plants. Therefore, these products are especially useful in organic farming and animal feed, as additives with a high nutritional value for livestock or aquaculture, for instance.

### OBJECT OF THE INVENTION

The present invention therefore aims to provide a method for obtaining organic enzyme extracts from brewing waste.

Furthermore, the invention aims to provide organic enzyme extracts obtainable by said method.

Finally, the invention aims to provide the use of such organic extracts in agriculture and animal feeding.

### DESCRIPTION OF THE FIGURES

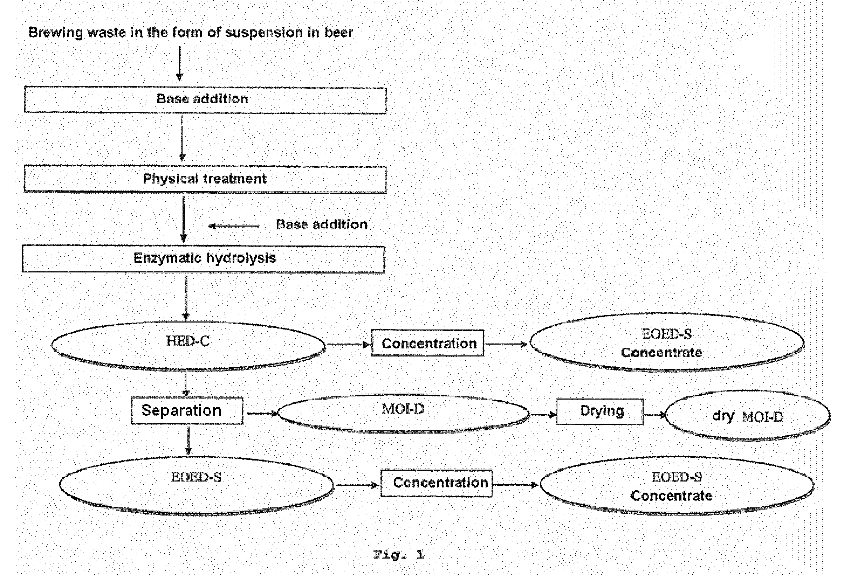

Figure 1 shows the block diagram of one embodiment of the method of the invention, wherein the brewing waste in the form of suspension in beer undergoes alkaline treatment, followed by a physical treatment and enzymatic hydrolysis to directly obtain an organic enzyme extract (HED-C), as well as after further steps of concentration and / or separation, other interesting organic enzyme extracts (HED-C concentrate, EOED-S and EOED-S concentrate) and insoluble organic matter (MOI-D).

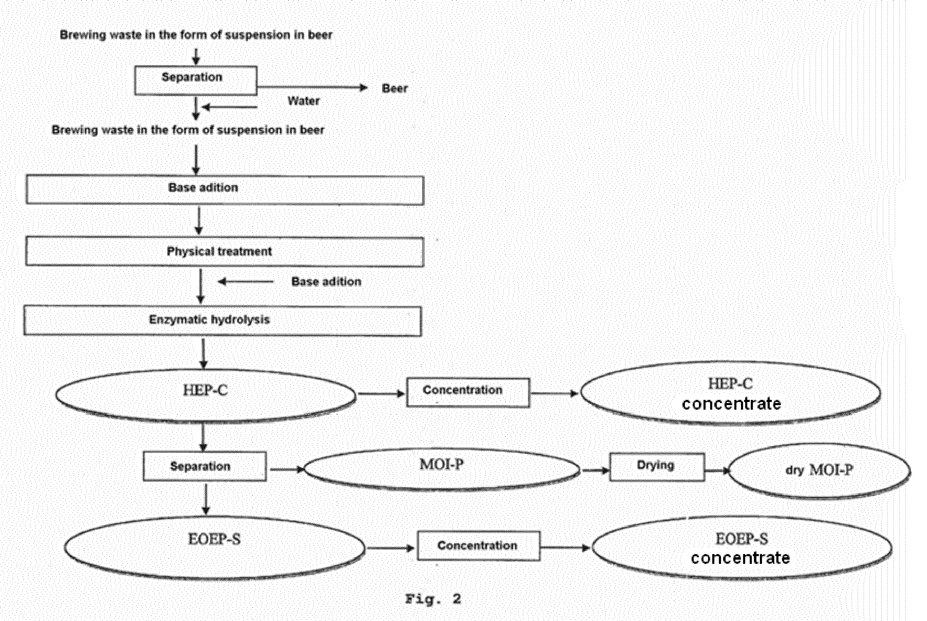

Figure 2 shows the block diagram of a particular embodiment of the method of the invention, wherein the brewing waste in the form of suspension in beer is separated therefrom and is then resuspended with water before Undergoing alkaline treatment followed by a physical treatment and enzymatic hydrolysis to directly obtain an organic enzyme extract (HEP-C), as well as after further steps of concentration and / or separation, other interesting organic enzyme extracts (HEP-C concentrate, EOEP-S and EOEP-S concentrate) and insoluble organic matter (MOI-P).

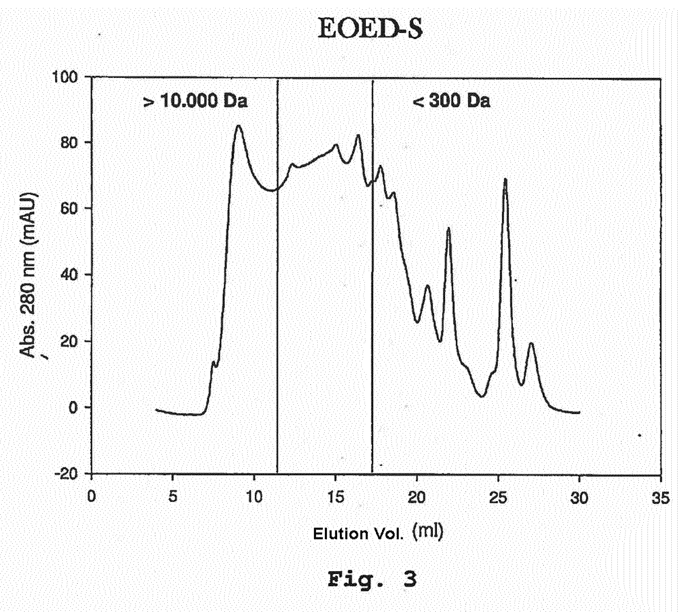

Figure 3 shows the peptide profile of one of the extracts obtained by the method of the invention.

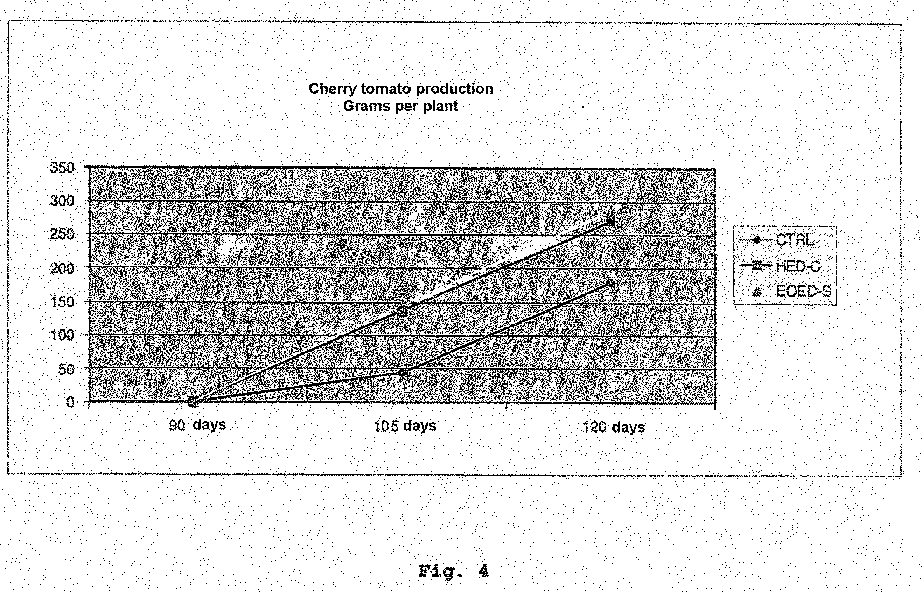

Figure 4 shows the production of cherry tomatoes in grams and time involved, when applying a control composition and two extracts obtained by the method of the invention.

### DETAILED DESCRIPTION OF THE INVENTION

The present invention provides a method for obtaining an organic enzyme extract from brewing waste (hereinafter "the method of the invention") comprising the following steps:
(a) adding to the waste in the form of suspension a concentrated base to adjust the pH thereof;
(b) subjecting the mixture obtained in step (a) to super-atmospheric pressure and high temperature; and
(c) subjecting the mixture obtained in step (b) to an enzymatic hydrolysis to obtain an organic enzyme extract;
and which is conducted by "one-pot" synthesis.

In the context of the invention the expression "brewing waste" refers to the by-products obtained during the process of industrial production of beer. More particularly these wastes consist of yeast and by-products from the fermentation of barley malt (protein, water-soluble B-complex vitamins, phosphates, minerals such as potassium, sulphur, magnesium, calcium or sodium, unsaturated fatty acids, lecithin, cephalins, carbohydrates such as glycogen, trehalose, glucan or mannan, ethyl alcohol, carbon dioxide, traces of esters, aldehydes, ketones, and higher alcohols, etc.). These residues may be suspended in the beer, exactly as they come out of the industrial plant, without drying or concentration, or in solid form after the remnant beer has been removed. The remnant beer can be separated by any conventional method such as filtration, sedimentation or centrifugation, for instance.

In a particular embodiment of the method of the invention, the elemental composition of the waste to be treated, expressed in percentage by weight, is the following:

| | % C | % N | % P | % K | % S |
|---|---|---|---|---|---|
| Waste suspended in beer | 44.22 | 7.73 | 1.48 | 1.78 | 0.36 |
| Waste without remnant beer | 47.06 | 8.56 | 1.22 | 0.65 | 0.36 |

In the case of starting from solid waste from without remnant beer, a suitable solvent is added thereto to obtain a suspension that can undergo the method of the invention.

Thus, in one particular embodiment of the method of the invention, this comprises a step prior to step (a) wherein the waste is obtained in the form of suspension. In a preferred embodiment, in this prior step, the solvent is added to the solid waste to obtain a suspension with a dry matter concentration of 8 25% by weight, preferably 15 % by weight.

In another preferred embodiment, the solvent used to suspend the solid waste is water. In another preferred embodiment, the solvent used to suspend the solid waste is a liquid solution or a suspension with any organic matter originating from any agrifood industry having a dry matter content below 10% by weight, preferably 4-8% by weight. In a more preferred embodiment, the solvent used to suspend the solid waste is whey from cheese production. In an even more preferred embodiment, the solvent used to suspend the solid waste is whey from cheese production with a dry matter content below 10% by weight, preferably 4-8% by weight.

On the other hand, in the context of the invention the expression "one-pot" means that the procedure is carried out without intermediate separation steps so that the starting waste is entirely used, i.e. nitrogen and mass yield is 100%.

Also, in the context of the invention the expression "bio-fertilizers and bio-stimulants" refers to compounds capable of stimulating the growth and development of plants and crops, as well as increasing and enhancing microbiological activity of the soil.

The waste in the form of suspension is subjected to the alkaline treatment of step (a) of the method of the invention, for which a suitable base selected by the expert is used. Thus, in one particular embodiment of the method of the invention, the base of step (a) is selected from between ammonium hydroxide, potassium hydroxide and calcium hydroxide. In a preferred embodiment, the base is ammonium hydroxide. In another preferred embodiment, the base is potassium hydroxide. This base is used in concentrated form to avoid increasing the reaction volume in excess, something that would increase energy costs by heating, concentrating, etc.., as well as the equipment costs. This concentration will be selected by the expert according to the desired pH range for the subsequent enzymatic hydrolysis. In a more preferred embodiment ammonium hydroxide at 28% by weight is used. Another more preferred embodiment uses potassium hydroxide 10 M.

After alkaline treatment of the waste in the form of suspension, the physical treatment of the mixture is conducted at a super-atmospheric pressure and high temperature.

Thus, in one particular embodiment of the method of the invention, a pressure of 102-141 kPa is applied in step (b) at an elevated temperature. In a preferred embodiment, a pressure of 105-120 kPa is applied in step (b) at an elevated temperature. In a more preferred embodiment, a pressure of 115 kPa is applied in step (b) at an elevated temperature.

Thus, in one particular embodiment of the method of the invention, a super-atmospheric pressure is applied in step (b) at a temperature of 90-140 °C. In a preferred embodiment, a super-atmospheric pressure is applied in step (b) at a temperature of 100-130 °C. In a more preferred embodiment, a super-atmospheric pressure is applied in step (b) at a temperature of 120 °C.

In another particular embodiment of the method of the invention, a pressure of 102-141 kPa is applied in step (b) at a temperature of 90-140 °C. In a preferred embodiment, a pressure of 105-120 kPa is applied in step (b) at a temperature of 100-130 °C. In a more preferred embodiment, a pressure of 116 kPa is applied in step (b) at a temperature of 120 °C.

This physical treatment is carried out in any suitable device selected by the expert such as an autoclave, for instance.

After the physical treatment of the method of the invention, the enzymatic treatment is performed. Optionally, after the physical treatment and before the enzymatic treatment, a concentrated base is added so that the mixture to be treated has the optimum pH value of the enzyme to be used.

The enzyme to be used in the enzymatic hydrolysis of step (c) is a proteolytic enzyme of microbial, plant or animal origin. Thus, the enzyme used in the method of the invention can be an alkaline protease such as subtilisin, a neutral protease produced by Bacillus sp. Trypsin or chymotrypsin, for instance.

Thus, in one particular embodiment of the method of the invention, the enzyme used in step (c) is an alkaline protease. In a preferred embodiment, the enzyme used in step (c) is subtilisin.

In another particular embodiment of the method of the invention, the enzymatic hydrolysis of step (c) is performed using a concentration of 0.05%-0.5% by volume of enzyme stock solution with an activity of 70,000 units (azocasein assay). In a preferred embodiment, the enzymatic hydrolysis of step (c) is performed using a concentration of 0.3% by volume of said stock solution.

Moreover, the conditions of pressure, temperature, pH and time of the enzymatic hydrolysis will be those in which maximum enzyme activity is achieved. Thus, in another particular embodiment of the method of the invention, the enzymatic hydrolysis of step (c) is conducted at a temperature of 40-70 °C and a pH of 8-11 for a period of 2-48 h. In a preferred embodiment, the enzymatic hydrolysis of step (c) is conducted at a temperature of 55 °C and a pH of 9.2 for a period of 24 h.

In a particular embodiment of the method of the invention, during the enzymatic hydrolysis the pH value is maintained constant by adding a base such as, for example, ammonium hydroxide or potassium hydroxide.

The enzymatic treatment can be performed in any suitable device selected by the expert, such as a reactor with temperature control and stirring for example.

After this final enzymatic hydrolysis an organic enzyme extract is obtained hereinafter "organic enzyme extract of the invention" which contains practically all the hydrolyzed starting protein, i.e. more than 90% by weight, in the form of free amino acids, oligopeptides and other peptides having a higher molecular weight, and also practically all nutrients from the starting waste and, where appropriate, the nutrients from the liquid solution or suspension of organic matter from the agrifood industry used in the in the suspension of the solid waste without remnant beer.

Thus, in another aspect of the invention an organic enzyme extract is obtained by the method of the invention described above. Said extract is rich in proteins, mostly in the form of peptides and high-bioabsorption free amino acids (free amino acids, oligopeptides and peptides having a low molecular weight under 10,000 Daltons), as well as carbohydrates, and is free of fat and cholesterol. Its nutritional chemical composition by dry weight is as follows:

| | |
|---|---|
| Proteins | 45-55% |
| Carbohydrates | 40-45% |
| Ashes | Remainder |

The constituent amino acids, oligopeptides and low molecular-weight peptides are nutrients easily absorbed and assimilated by plants, both through leaves and roots, being transported to the plant organs such as buds, flowers or fruits, for instance (Gjalakshimi et al., 2004, Bioresource Technlogy (92) :291-296; Parrado et al., 2008 Bioresource Technology 99 (2008) 2312-2318). There they can be used for the plant to develop its own proteins, saving a number of energy-consuming metabolic processes (Higgings, C.F., Payne, J.W., 1982. Plant peptides. In: Boulder, D., Parthier, B.,(Eds). Encyclopedia of Plant Physiology, 14A. Springer. 438-458). And not only can they be absorbed and used by plants, but moreover the existing micro-fauna in the edaphic environment is capable of using them as nitrogen source, essential for plant growth and activity. This nitrogen is an essential element because it is a basic constituent of proteins, nucleic acids, chlorophylls, etc. and thus enables the development of the metabolic activity of plants and microorganisms. Likewise, amino acids, oligopeptides and low-molecular-weight peptides are also readily absorbable and assimilable by animal when incorporated into their diet.

Therefore, the organic enzyme extract of the invention can be used as such for agricultural and livestock purposes, for example.

Thus, another aspect of the invention provides the use of the previously described organic enzyme extract in agriculture and animal feeding. More particularly, the organic enzyme extract of the invention can be used as a bio-stimulant and a bio-fertilizer in organic farming given its special composition of amino acids, oligopeptides and peptides having a low molecular weight. It can also be used as a nutritional additive with a high added value as animal feed, more particularly, for livestock feed (cattle, sheep, goats, etc.) or aquaculture or for domestic animals or pets, for instance.

The method of applying the organic enzyme extract of the invention to an agricultural crop can be done by any conventional technique such as, for example, direct application to the soil or via the leaves or by fertigation.

Furthermore, the organic enzyme extract of the invention can alternatively undergo further steps of concentration and / or separation for stabilization.

In a particular embodiment, the method of the invention comprises a further step after step (c) wherein the organic enzyme extract obtained after said step (c) is subjected to concentration to obtain a concentrated organic enzyme extract, hereinafter "concentrated organic enzyme extract of the invention". The concentrated organic enzyme extract of the invention has at least 40% by weight of dry matter, preferably at least 50% by weight of dry matter, more preferably 50-55% by weight of dry matter. This concentration may be achieved by any conventional method of the prior art, such as, for example, by heating and using a rotary evaporator with a thermostatic bath or reverse osmosis, for example, or any other suitable device.

In another particular embodiment, the method of the invention comprises a further step after step (c) wherein the organic enzyme extract obtained after said step (c) is subjected to separation to obtain: (i) a soluble organic enzyme extract, hereinafter "soluble organic enzyme extract of the invention", and (ii) a solid phase, hereinafter "insoluble organic matter of the invention" This separation can be done by any conventional method of the prior art, such as, for example, by filtration or centrifugation using a decanter or other suitable industrial device, for example.

The soluble organic enzyme extract of the invention contains virtually all the hydrolyzed starting protein, i.e. more than 90% by weight, and therefore it provides a composition making it suitable for agricultural and livestock purposes also. More particularly, it can be used as a bio-stimulant and bio-fertilizer in organic farming given its special composition of free amino acids, oligopeptides and peptides with a low molecular weight. It can also be used as a nutritional additive with a high added value for animal feed, more particularly, animal feed for livestock (cattle, sheep, goats, etc...) or aquaculture, or for domestic animal or pets, for instance.

The insoluble organic matter of the invention, in turn, can undergo a final drying process to obtain a solid by-product in the form of a paste with a moisture content of 10-15% by weight. Such drying process may be performed by any conventional method such as by using hot air circulating ovens, for example.

The concentrated or not concentrated insoluble organic matter of the invention can also be used as a nutritional additive with a high added value for animal feed, more particularly, animal feed for livestock (cattle, sheep, goats, etc...) or aquaculture, or for domestic animals or pets, for instance.

Optionally the soluble organic enzyme extract of the invention can undergo further concentration. Thus, in a preferred embodiment, the method of the invention comprises a further step after step (c) wherein the organic enzyme extract obtained after said step (c) is subjected to separation, followed by a step of concentration of the organic enzyme extract obtained in order to obtain a concentrated soluble organic enzyme extract, hereinafter "concentrated soluble organic enzyme extract of the invention". The concentrated soluble organic enzyme extract of the invention has at least 40% by weight of dry matter, preferably at least 50% by weight of dry matter, more preferably 50-55% by weight of dry matter. This concentration may be performed by any conventional method of the prior art, such as, for example, by heating and vacuum using a rotary evaporator with a thermostatic bath or reverse osmosis, for example, or any other suitable device.

The concentrated organic enzyme extract of the invention and the concentrated soluble organic enzyme extract of the invention are extracts with a composition also making them suitable for agricultural and livestock purposes also. More in particular, they can be used as bio-stimulants and bio-fertilizers in organic farming given their special composition of amino acids, oligopeptides and peptides with a low molecular weight. They can also be used as a nutritional additive with a high added value for animal feed, more particularly, animal feed for livestock (cattle, sheep, goats, etc...) or aquaculture, or for domestic animals or pets, for instance.

The following examples illustrate the invention and should not be considered to limit the scope thereof.

### EXAMPLE 1

### Obtaining extracts from brewing waste in the form of suspension in beer.

**Figure 1** shows the block diagram of this particular embodiment of the method of the invention.

500 g of brewing waste in the form of suspension in beer (RFC) were treated in an open glass reactor with 28% NH₃ to pH 9.6 while stirring (60-80 rpm). The percentage of dry matter of the RFC was 10.27% w/w (10.77% w/v) and the chemical composition was the following:

**Table 1. Elemental chemical composition of RFC (% by weight)**

| % C | % N | % P | % K | % S |
|---|---|---|---|---|
| 44.22 | 7.73 | 1.48 | 1.78 | 0.36 |

After the alkaline treatment a physical process was carried out at a pressure of 115 kPa and a temperature of 120 °C for 20 minutes in an autoclave. The solution thus obtained was adjusted to pH 9.2 with potassium hydroxide 10 M.

This solution at pH 9.2 was maintained at 55 °C in a thermostated bath while stirring (60-80 rpm) and 0.3% v/v of Subtilisin was added (protease stock solution of 70,000 Units of activity / azocasein assay). The pH was maintained with 28% ammonia. Such hydrolysis conditions were maintained for 24 hours.

The resulting liquid organic enzyme extract (HED-C) was collected at 24 hours, having the following composition:

**Table 2. Elemental chemical composition of HED-C (% by weight)**

| % C | % N | % P | % K | % S |
|---|---|---|---|---|
| 42.73 | 7.1 | 1.27 | 3.88 | 0.34 |

**Table 3. Nutritional chemical composition by dry weight**

| | |
|---|---|
| Protein | 47% |
| Carbohydrates | 46% |
| Ash | 6% |

The nitrogen and mass yield of the process is 100%, since there is no phase separation and the RFC is used entirely.

Then 500 ml of HED-C were concentrated 5 times in a rotary evaporator with a thermostated bath at 70 °C thereby obtaining a concentrated organic enzyme extract (HED-C concentrate) in the form of stable syrup with 50-55% by weight of dry matter.

Moreover, 500 ml of HED-C were centrifuged at 4000 G for 30 minutes. Thus 400 ml of an soluble organic enzyme extract (EOED-S, 80% of the initial volume) and 107.5 g of insoluble organic matter (MOI-D) were obtained, with a dry matter content by weight of 9.77 and 20.35%, respectively. Hereunder, Table 4 shows the chemical compositions of both products in dry matter. The mass yield from obtaining EOED-S is 65%, while MOI-D maintains 35% of the initial matter.

**Table 4. Elemental chemical composition of EOED-S and MOI-D % by weight)**

| EOED-S | | | | |
|---|---|---|---|---|
| % C | % N | % P | % K | % S |
| 41.86 | 8.11 | 1.32 | 4.82 | 0.37 |

| MOI-D | | | | |
|---|---|---|---|---|
| % C | % N | % P | % K | % S |
| 44.39 | 5.16 | 1.18 | 2.08 | 0.29 |

**Table 5. Nutritional chemical composition by dry weight of EOED-S**

| | |
|---|---|
| Protein | 54% |
| Carbohydrates | 39% |
| Ash | 6% |

The amino acid composition of EODE-S was also established, as well as its peptide profile. The results are shown in Tables 6 and 7.

**Table 6 Amino acid composition of EOED-S (% by weight)**

| | % of amino acids | | % of amino acids |
|---|---|---|---|
| Isoleucine | 2.89 | Alanine | 5.9 |
| Leucine | 4.87 | Arginine | 1.9 |
| Lysine | 8.81 | Asparagine | 4.85 |
| Cysteine + Methiohine | 0.67 | Aspartic | 2.78 |
| Phenylalanine + Tyrosine | 3.82 | Glutamic | 7.8 |
| Threonine | 2.21 | Glycine | 3.27 |
| Tryptophan | 0.98 | Histidine | 729 |
| Valine | 5.87 | Serine | 3.04 |

**Table 7. Peptide profile of EOED-S (% by wight)**

| **Size (Daltons)** | **% of total** |
|---|---|
| > 10,000 | 38.31 |
| 10,000-5,000 | 18.07 |
| 3,000 - 1,000 | 12.23 |
| 1,000 - 300 | 6.18 |
| < 300 | 25.22 |

**Figure 3** shows a graph with the peptide profile of the EOED-S extract, wherein the peptides with a size below 300 Da relate to free amino acids and small peptides.

Then EOED-S concentration was conducted, providing 50.5 ml of a concentrated soluble organic enzyme extract (EOED-S concentrate) in the form of syrup with 77.4% by weight of organic matter. The MOI-D was dried at 90 °C until containing 25 g with 10-15 % by weight of humidity.

### EXAMPLE 2

### Obtaining extracts from brewing waste in the form of suspension in water.

Figure 2 shows the block diagram of this particular embodiment of the method of the invention, wherein the starting point is waste in the form of suspension in water which, in turn, has been obtained from the brewing waste in the form of suspension in beer from which the remnant beer has been removed and to which water has been subsequently added.

Thus, 500 ml of brewing waste in the form of suspension in beer (RFC) were treated in a centrifuge at 4000 G for 1-2 hours while maintaining the temperature at 4 °C.

354 ml of the supernatant obtained (beer) were removed leaving 149 g of brewing waste in solid form (RFC-Sol), with a percentage of dry matter of 24.30% by weight and whose composition is shown in Table 8:

**Table 8. Elemental chemical composition of RFC-sol (% by weight)**

| %C | % N | % P | % K | % S |
|---|---|---|---|---|
| 47.06 | 8.56 | 1.22 | 0.65 | 0.36 |

354 ml of water from the mains were added to the 149 g of RFC-Sol, and were homogenized until computing the initial volume (500 ml). This was then basified with ammonia to pH 9.6 with stirring.

This solution was subjected to a physical process at a pressure of 115 kPa and a temperature of 120 °C for 20 minutes in an autoclave. The solution thus obtained was adjusted to pH 9.2 with potassium hydroxide 10 M.

This solution at pH 9.2 was placed in an open reactor and maintained at 55 °C in a thermostated bath while stirring (60-80 rpm) and 0.3% v/v of Subtilisin was added (protease stock solution 70,000 units of activity / azocasein assay). The pH was maintained with 28% ammonia. Such hydrolysis conditions were maintained for 24 hours.

The resulting organic enzyme extract (HEP-C) was collected, its composition being as follows:

**Table 9. Elemental chemical composition of HEP-C (% by weight)**

| %C | % N | % P | % K | % S |
|---|---|---|---|---|
| 45.17 | 7.80 | 1.04 | 3.45 | 0.34 |

**Table 10. Nutritional chemical composition by dry weight**

| | |
|---|---|
| Protein | 52% |
| Carbohydrates | 41% |
| Ash | 6% |

The yield of nitrogen and mass of this process is 100%, since there is no phase separation and the RFC-Sol is used entirely.

500 ml of HEP-C were then concentrated in a rotating evaporator with a thermostated bath at 55 °C, obtaining a concentrated organic enzyme extract (HEP-C concentrate) in the form of a stable syrup with 50-55% by weight of dry matter.

Moreover, 500 ml of HEP-C were centrifuged at 4000 G for 30 minutes.

Thus 400 ml of the soluble organic enzyme extract (EOEP-S) were obtained, with 5.86% by weight of dry matter (23.44 g) and 107.5 g of insoluble organic matter (MOI-P), with 19.58% by weight of dry matter (21 g).

The mass yield was 52.81% in EOEP-S and 47.19% in MOI-P. The nitrogen yield was 55% in EOEP-S and 45% in MOI-P.

The chemical compositions of both the products obtained are shown in Stable 11.

**Table 11. Elemental chemical composition of EOEP-S and MOI-P (% by weight)**

| EOEP-S | | | | |
|---|---|---|---|---|
| % C | % N | % P | % K | % S |
| 42.8 | 8.784 | 1.38 | 4.34 | 0.38 |

| MOI-P | | | | |
|---|---|---|---|---|
| % C | % N | % P | % K | % S |
| 43.83 | 6.09 | 1.5 | 1.78 | 0.32 |

Concentration was then conducted to 10 times in volume of EOEP-S (this containing approximately 60% by weight of dry matter). The MOI-P was dried at 90 °C until containing 10-15% by weight of moisture, yielding 16.75 g thereof.

### EXAMPLE 3

### Applying the extracts obtained in Example 1 as bio-stimulants and bio-fertilizer in the greenhouse production of cherry tomatoes.

Two of the extracts obtained in Example 1 (HED-C and EOED-S) were tested in the greenhouse production of cherry tomatoes (controlled conditions of humidity and temperature). The control was treated only with water, using white peat as support.

Tested groups were defined by trays with 5 pots each, and each tray was applied a different product. Treatments began after plant germination and transplant to the pot.

The doses used were 1.3 grams of HED-C/ litre of irrigation water and 0.939 grams of EOED-S/ litre of irrigation water, depending on the nitrogen content.

### Plant height

Growth in height was measured in centimetres for the different groups tested. The results are shown in Table 12:

**Table 2. Average plant height (cm)**

| Time (days) | Control | HED-C | EOED-S |
|---|---|---|---|
| 1 | 20.4 | 19.4 | 19.4 |
| 8 | 27.4 | 27.6 | 31 |
| 21 | 34 | 34.5 | 35.3 |
| 35 | 40.7 | 47 | 47.7 |

All groups tested statistically outperformed the control group in height.

### Tomato production

Table 13 presents data pertaining to the grams of Cherry tomatoes produced per plant.

**Table 13. Weight of Cherry tomatoes produced (g)**

| | 90 days | 105 days | 120 days |
|---|---|---|---|
| CTRL | 0 | 44.52 | 179.78 |
| HED-C | 0 | 137.50 | 272.20 |
| EOED-S | 0 | 146.32 | 285.88 |

**Figure 4** graphically shows these results, based on which it is concluded that the application of the extracts of the invention induces a remarkable increase in the production of tomatoes

## Claims

1. A method for obtaining an organic enzyme extract from brewing waste, **characterized in that** it comprises the following steps:
(a) adding to the waste in the form of suspension a concentrated base to adjust the pH thereof;
(b) subjecting the mixture obtained in step (a) to a super-atmospheric pressure and high temperature, and
(c) subjecting the mixture obtained in step (b) to an enzymatic hydrolysis to obtain an organic enzyme extract;
and **in that** it is performed by "one-pot" synthesis.

2. Method according to claim 1, **characterized in that** it comprises a step prior to step (a) to obtain the waste in the form of suspension

3. Method according to claim 1, **characterized in that** it comprises a step subsequent to step (c) wherein the organic enzyme extract obtained is subjected to concentration to obtain a concentrated organic enzyme extract with at least 40% by weight of dry matter.

4. Method according to claim 1, **characterized in that** it comprises a step subsequent to step (c) wherein the organic enzyme extract obtained is subjected to separation to obtain: (i) a soluble organic enzyme extract, and (ii) a solid phase.

5. Method according to claim 4, **characterized in that** the soluble organic enzyme extract is subjected to concentration to obtain a concentrated soluble organic enzyme extract with at least 40% by weight of dry matter.

6. Method according to claim 1, **characterized in that** the concentrated base of step (a) is selected from between ammonium hydroxide, potassium hydroxide and calcium hydroxide.

7. Method according to claim 6, **characterized in that** the concentrated base of step (a) is ammonium hydroxide.

8. Method according to claim 1, **characterized in that** a pressure of 102-141 kPa is applied at a temperature of 90-140°C in step (b).

9. Method according to claim 8, **characterized in that** a pressure of 115 kPa is applied at a temperature of 120 °C.

10. Method according to claim 1, **characterized in that** the enzyme used in step (c) is an alkaline protease.

11. Method according to claim 10, **characterized in that** the enzyme used in step (c) is subtilisin.

12. Method according to claim 1, **characterized in that** in step (c) the enzymatic hydrolysis is conducted at a temperature of 40-70 °C and a pH of 8-11 for 2-48 h.

13. Method according to claim 12, **characterized in that** the enzymatic hydrolysis is conducted at a temperature of 55 ° C and pH 9.2 for 24 h.

14. Organic enzyme extract obtainable by the method according to any of claims 1 to 13, **characterized in that** it contains over 90% by weight of the hydrolyzed protein of the starting waste in the form of free amino acids, oligopeptides and other peptides with a higher molecular weight.

15. The use of the organic enzyme extract according to Claim 14 for agriculture and animal feed.

## Patentansprüche

1. Verfahren zum Erhalten von einem organischen Enzymextrakt aus Brauereiabfällen, **dadurch gekennzeichnet, dass** es die folgenden Schritte umfasst:
(a) das Hinzufügen einer konzentrierten Base zu den Abfällen in Form einer Suspension, um den pH-Wert derselben einzustellen;
(b) das Aussetzen der in Schritt (a) erhaltenen Mischung einem überatmosphärischen Druck und einer hohen Temperatur, und
(c) das Aussetzen der in Schritt (b) erhaltenen Mischung einer enzymatischen Hydrolyse, um einen organischen Enzymextrakt zu erhalten;
und dass es mittels einer "Eintopfsynthese" durchgeführt wird.

2. Verfahren nach Anspruch 1, **dadurch gekennzeichnet, dass** es vor Schritt (a) einen Schritt umfasst, um die Abfälle in Form einer Suspension zu erhalten.

3. Verfahren nach Anspruch 1, **dadurch gekennzeichnet, dass** es nach Schritt (c) einen Schritt umfasst, in welchem der erhaltene organische Enzymextrakt einer Konzentration ausgesetzt wird, um einen konzentrierten organischen Enzymextrakt mit mindestens 40 Gew.-% Trockenmasse zu erhalten.

4. Verfahren nach Anspruch 1, **dadurch gekennzeichnet, dass** es nach Schritt (c) einen Schritt umfasst, in welchem der erhaltene organische Enzymextrakt einer Trennung ausgesetzt wird, um (i) einen löslichen organischen Enzymextrakt, und (ii) eine feste Phase zu erhalten.

5. Verfahren nach Anspruch 4, **dadurch gekennzeichnet, dass** der lösliche organische Enzymextrakt einer Konzentration ausgesetzt wird, um einen konzentrierten löslichen organischen Enzymextrakt mit mindestens 40 Gew.-% Trockenmasse zu erhalten.

6. Verfahren nach Anspruch 1, **dadurch gekennzeichnet, dass** die konzentrierte Base aus Schritt (a) aus Ammoniumhydroxid, Kaliumhydroxid und Calciumhydroxid ausgewählt wird.

7. Verfahren nach Anspruch 6, **dadurch gekennzeichnet, dass** die konzentrierte Base aus Schritt (a) Ammoniumhydroxid ist.

8. Verfahren nach Anspruch 1, **dadurch gekennzeichnet, dass** in Schritt (b) ein Druck von 102-141 kPa bei einer Temperatur von 90-140°C ausgeübt wird.

9. Verfahren nach Anspruch 8, **dadurch gekennzeichnet, dass** ein Druck von 115 kPa bei einer Temperatur von 120°C ausgeübt wird.

10. Verfahren nach Anspruch 1, **dadurch gekennzeichnet, dass** das in Schritt (c) verwendete Enzym eine alkalische Protease ist.

11. Verfahren nach Anspruch 10, **dadurch gekennzeichnet, dass** das in Schritt (c) verwendete Enzym Subtilisin ist.

12. Verfahren nach Anspruch 1, **dadurch gekennzeichnet, dass** in Schritt (c) die enzymatische Hydrolyse bei einer Temperatur von 40-70°C und einem pH-Wert von 8-11 2-48 h lang durchgeführt wird.

13. Verfahren nach Anspruch 12, **dadurch gekennzeichnet, dass** die enzymatische Hydrolyse bei einer Temperatur von 55°C und einem pH-Wert von 9.2 24 h lang durchgeführt wird.

14. Organischer Enzymextrakt erhältlich mittels des Verfahrens nach einem der Ansprüche 1 bis 13, **dadurch gekennzeichnet, dass** er über 90 Gew.-% des hydrolysierten Proteins der Ausgangsabfälle in Form von freien Aminosäuren, Oligopeptiden und anderen Peptiden mit einem höheren Molekulargewicht enthält.

15. Verwendung des organischen Enzymextrakts nach Anspruch 14 für Landwirtschaft und Tierfütterung.

## Revendications

1. Procédé d'obtention d'un extrait enzymatique organique à partir de déchet de brasserie, **caractérisé en ce qu'**il comprend les étapes suivantes:
(a) ajouter au déchet sous forme de suspension une base concentrée pour ajuster son pH;
(b) soumettre le mélange obtenu dans l'étape (a) à une pression sur-atmosphérique et à température élevée, et
(c) soumettre le mélange obtenu dans l'étape (b) à une hydrolyse enzymatique pour obtenir un extrait enzymatique organique;
et **en ce qu'**il est réalisé par une synthèse monotope.

2. Procédé selon la revendication 1, **caractérisé en ce qu'**il comprend une étape antérieure à l'étape (a) pour obtenir le déchet sous forme de suspension.

3. Procédé selon la revendication 1, **caractérisé en ce qu'**il comprend une étape postérieure à l'étape (c) dans lequel l'extrait enzymatique organique obtenu est soumis à concentration pour obtenir un extrait enzymatique organique concentré avec au moins 40% en poids de matière sèche.

4. Procédé selon la revendication 1, **caractérisé en ce qu'**il comprend une étape postérieure à l'étape (c) dans lequel l'extrait enzymatique organique obtenu est soumis à séparation pour obtenir : (i) un extrait enzymatique organique soluble, et (ii) une phase solide.

5. Procédé selon la revendication 4, **caractérisé en ce que** l'extrait enzymatique organique soluble est soumis à concentration pour obtenir un extrait enzymatique organique concentré soluble avec au moins 40% en poids de matière sèche.

6. Procédé selon la revendication 1, **caractérisé en ce que** la base concentrée de l'étape (a) est choisie parmi l'hydroxyde d'ammonium, l'hydroxyde de potassium et l'hydroxyde de calcium.

7. Procédé selon la revendication 6, **caractérisé en ce que** la base concentrée de l'étape (a) est de l'hydroxyde d'ammonium.

8. Procédé selon la revendication 1, **caractérisé en ce qu'**une pression de 102-141 kPa est appliquée à une température de 90-140°C dans l'étape (b).

9. Procédé selon la revendication 8, **caractérisé en ce qu'**une pression de 115 kPa est appliquée à une température de 120°C.

10. Procédé selon la revendication 1, **caractérisé en ce que** l'enzyme utilisée dans l'étape (c) est une protéase alcaline.

11. Procédé selon la revendication 10, **caractérisé en ce que** l'enzyme utilisée dans l'étape (c) est de la subtilisine.

12. Procédé selon la revendication 1, **caractérisé en ce que** dans l'étape (c) l'hydrolyse enzymatique est effectuée à une température de 40-70 °C et un pH de 8-11 pendant 2-48 heures.

13. Procédé selon la revendication 12, **caractérisé en ce que** l'hydrolyse enzymatique est effectuée à une température de 55°C et un pH 9.2 pendant 24 h.

14. Extrait enzymatique organique susceptible d'être obtenu par le procédé selon l'une quelconque des revendications 1 à 13, **caractérisé en ce qu'**il contient plus de 90% en poids de la protéine hydrolysée du déchet de départ sous forme d'acides aminés libres, d'oligopeptides et d'autres peptides avec un poids moléculaires plus élevé.

15. Utilisation de l'extrait enzymatique organique selon la revendication 14 pour l'agriculture et l'alimentation animale.
